# EUROPEAN PATENT APPLICATION

(11) **EP 2 983 124 A1**
(43) Date of publication of application: **10.02.2016**
(21) Application number: 15179604.2
(22) Date of filing: 04.08.2015
(51) Int. Cl.: G06Q 40/00, G06Q 40/08

(54) **SYSTEMS AND METHODS FOR MULTI-CHANNEL DATA AGGREGATION**

(30) Priority: 04.08.2014 IN MU25022014
(71) Applicant: Tata Consultancy Services Limited, Mumbai 400 021 (IN)
(72) Inventor: MAJUMDAR, Arunashish, Edison, NJ New Jersey 08837 (US); Sivasubramanian, Thirunavukarasu, Edison, NJ New Jersey 08837 (US); Ukil, Anirban, Edison, NJ New Jersey 08837 (US); Bhattacharya, Indranath, Edison, NJ New Jersey 08837 (US); Vasudevan, Meeralal, 682030 Kochi (IN); Chati, Aditya N, Edison, NJ New Jersey 08837 (US); Bangalore, Sri Hari, Edison, NJ New Jersey 08837 (US)
(74) Representative: Heinze, Ekkehard

(57) **Abstract**

Systems and methods for multi-channel data aggregation that can facilitate consumer engagement are provided to enable customer-centuc solutions by collecting data across the lifecycle of consumers, studying usage patterns and protection needs and facilitating meaningful collaborations between peers and experts. Gamification techniques are employed to aggregate voluminous data captured from multiple channels that can be analyzed for usage patterns to provide an insight into consumers' psyche and enable tailor-made solutions for promoting consumer stickiness.

## Description

### CROSS-REFERENCE TO RELATED APPLICATIONS AND PRIORITY

The present application claims priority from Indian Provisional Patent Application No. 2502/MUM/2014, filed on August 4th, 2014, the entirety of which is hereby incorporated by reference.

### TECHNICAL FIELD

The present disclosure in general relates to the field of data aggregation. More particularly, the present disclosure relates to systems and methods for data aggregation for leveraging a multi-channel consumer engagement framework.

### BACKGROUND

Almost every ecosystem framework that provides a service is challenged by the gap that exists in consumer engagement throughout their journey of being a prospect to becoming a customer and beyond. Typical touch points in a service industry like insurance are formulation, pre-commerce, commerce and post-commerce. Credible non-biased forums to discuss insurance and risk protection which provide peer advocacy and industry expert advice are the need of the hour. Furthermore, there is a lack of intuitive education to assist consumers in achieving the appropriate type of insurance cover. The insurance domain, particularly has grown marginally with the growth of information technology and information technology enabled resources. With the help of IT enabled services such as online purchases of insurance for commodities and life insurance covers, consumers have adopted themselves to web based systems for getting themselves insured. However, lack of adequate touch points with the customer is majorly responsible for reduced customer stickiness.

As number of competitors in the service industry, particularly insurance domain increase, it has become more and more difficult for consumers to analyze all the available options that meet their requirements like insurance covers provided by insurance companies and get unbiased peer and expert recommendations on best possible solutions that may be availed.

There is a need therefore for methods and systems that address the above and other possible drawbacks and limitations of the currently used methods and systems relating to the field of data aggregation and accordingly deriving personalized solutions based on informal interactions by consumers.

### SUMMARY

This summary is provided to introduce concepts related to consumer engagement in a service industry such as financial services with products like insurance, mutual funds, stocks and the like. This summary is neither intended to identify essential features of the claimed subject matter nor is it intended for use in determining or limiting the scope of the present disclosure.

The present disclosure is aimed at building a platform for customer engagement throughout the consumer's journey with a service provider such as an insurer, thereby promoting customer stickiness and increasing customer touch points to engage positively. The platform provides an environment to promote peer advocacy and create awareness of insurance concepts and needs among consumers. Further the platform can provide recommendations and advice that enables a customer to stay healthy and connect with friends and share their progress and wellness data irrespective of the wearable's or health apps the customers might be using.

Systems and methods for leveraging a multi-channel customer engagement framework are described for promoting insurance schemas, financial services and the like. In an embodiment, systems and methods for multi-channel data aggregation for facilitating consumer engagement are disclosed. The system can include one or more processors; a communication interface device; one or more internal data storage devices operatively coupled to the one or more processors for storing modules that can be configured to increase consumer touch points and enhance consumer stickiness. In an embodiment, system of the present disclosure can include a consumer engagement module that can be configured to provide an engagement platform that can include a user interface (UI) rendering engine for consumers to interact with at least one of peers, experts and system data via at least one digital channel, the consumer engagement module further including at least one gamification module that can be configured to utilize data captured from the at least one digital channel and enhance consumer engagement by providing a personalized experience to each of the consumers in an informal manner via the rendered UI. The system of the present disclosure can further include a usage module that can be configured to aggregate the captured data associated with each of the consumers throughout each consumer's engagement lifecycle; a consumer analytics module that can be configured to analyze usage patterns associated with each of the consumers; and a consumer collaboration module that can be configured to perform one or more combinations of identifying like-minded consumers and facilitating interaction between the identified consumers, facilitating interaction between at least one consumer and at least one expert and identifying and recommending at least one solution to at least one consumer corresponding to the analyzed usage patterns.

In an embodiment, the gamification module of the present disclosure can include at least one of a fitness age calculator that can ascertain the consumers' fitness age and compare it to their biological age; and a life and asset planner that can allow consumers to mimic real life goals related to financial planning, health, recreation, asset and life protection in a virtual environment and enable the consumers to explore solutions that can be applied to real life situations for enhanced living experiences. The fitness age calculator and the life and asset planner can provide an input to the consumer analytics module for predictive or prescriptive analytics.

### BRIEF DESCRIPTION OF DRAWINGS

The embodiments herein will be better understood from the following detailed description with reference to the drawings, in which:
Figure 1 illustrates a network implementation of a system for leveraging a multi channel customer engagement framework for promoting insurance schemas, in accordance with an embodiment of the present disclosure;
Figure 2 illustrates a system architecture, in accordance with an embodiment of the present disclosure;
Figure 3 illustrates an exemplary block diagram of a system for facilitating consumer engagement in accordance with an embodiment of the present disclosure;
Figure 4 illustrates an exemplary block diagram of a consumer engagement module in accordance with an embodiment of the present disclosure;
Figure 5 illustrates an exemplary flow diagram illustrating a method for facilitating consumer engagement;
Figure 6a-6c illustrate exemplary screenshots of a user interface in accordance with an embodiment of the present disclosure;
Figures 7a-7h illustrate exemplary screenshots of Fitness Age calculator in accordance with an embodiment of the present disclosure; and
Figures 8a-8c illustrate exemplary screenshots of Life and Asset Planner in accordance with an embodiment of the present disclosure.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

### DETAILED DESCRIPTION

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The expression "multi-channel" and "digital channel" as referred to in the present disclosure relates to but is not limited to smartphones, tablets, desktops, wearable devices, augmented reality rendering devices, hand-held and portable devices.

In the context of the present disclosure, the expressions "user", "customer", "consumer" and "prospective customer" may be used interchangeably.

The present disclosure relates to systems and methods for data aggregation that enables a multi-channel digital framework for a service provider such as an insurer. For ease of explanation, the description of systems and methods of the present disclosure is provided with reference to non-limiting examples of insurance domain / financial services. It may be understood by persons skilled in the art that the systems and methods of the present disclosure can be extended to generally any service industry wherein consumer stickiness is of prime importance.

A multi-channel digital framework of the present disclosure encompasses components with a unified goal to enhance consumer engagement and increased touch points with an insurer. The components collectively enable the consumer to be knowledgeable on risk protection and financial planning, and educate them of their current wellness state. Further, the framework, works towards improving the quality of the lifestyle through healthy living and connect with peers and experts in a social setting to exchange ideas, thoughts and seek advice. The framework takes advantage of gamification of insurance concepts to achieve at least some of these results in a non-tedious and fun manner with the intent of motivating customers to engage with the service provider that would ultimately enhance stickiness. Further, the framework provides flexibility to enable extending of the system beyond the current set of components. The framework enables the insurer to gain insight into consumer behavior to better serve and engage them by aggregating data that can be received from multiple channels and analyzing usage patterns of the consumers to provide tailor made solutions. The systems of the present disclosure can be accessed through any digital channel known in the art.

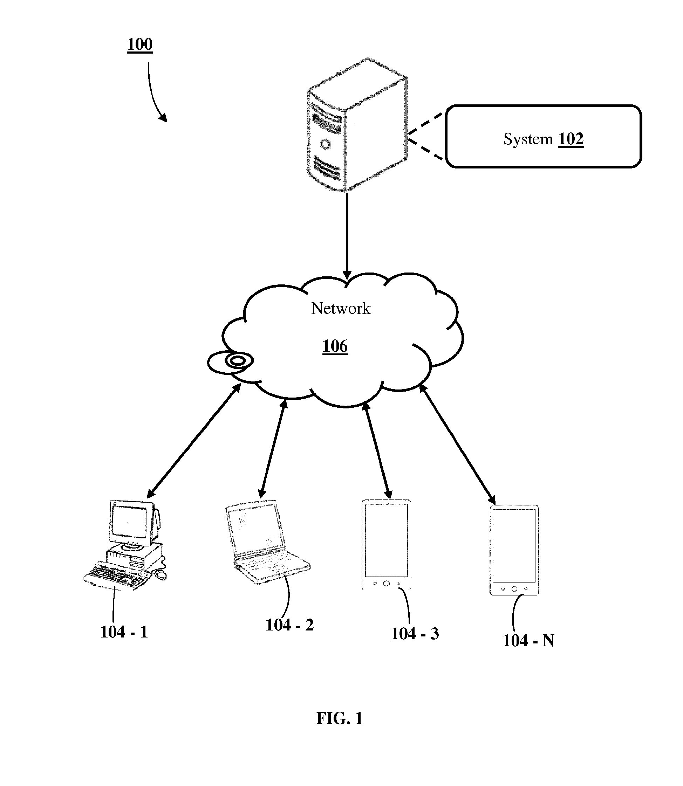

Referring now to the drawings, Figure 1 illustrates a network implementation 100 of a system 102 for leveraging a multi-channel customer engagement framework for promoting insurance schemas, in accordance with an embodiment of the present disclosure. Although the present disclosure is explained by considering that system 102 is implemented as a software application on a server, it may be understood that system 102 may also be implemented in a variety of computing systems, such as a laptop computer, a desktop computer, a notebook, a workstation, a mainframe computer, a server, a network server, cloud, hand-held device and the like. It will be understood that system 102 may be accessed by multiple consumers through one or more user devices 104-1, 104-2...104-N, collectively referred to as user devices 104 hereinafter, or applications residing on user devices 104. Examples of user devices 104 may include, but are not limited to, a portable computer, a personal digital assistant, a hand-held device, and a workstation. The user devices 104 are communicatively coupled to system 102 through network 106.

In one implementation, network 106 may be a wireless network, a wired network or a combination thereof. Network 106 can be implemented as one of the different types of networks, such as intranet, local area network (LAN), wide area network (WAN), the internet, and the like. Network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further network 106 may include a variety of network devices, including routers, bridges, servers, computing devices, storage devices, and the like.

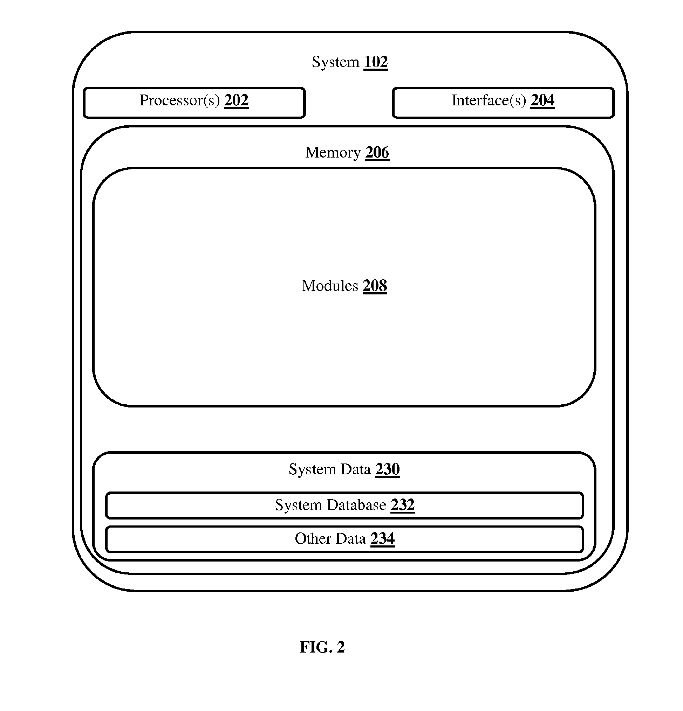

Referring now to Figure 2, architecture of system 102 is illustrated in accordance with an embodiment of the present disclosure. In one embodiment, system 102 can include at least one processor 202, communication interface or input/output (I/O) interface 204, and memory 206. Processor 202 can be implemented as one or more microprocessors, microcomputers, microcontrollers, digital signal processors, central processing units, state machines, logic circuitries, and/or any devices that manipulate signals based on operational instructions. Among other capabilities, processor 202 is configured to fetch and execute computer-readable instructions stored in memory 206.

I/O interface 204 can include a variety of software and hardware interfaces, for example, a web interface, a graphical user interface, and the like. I/O interface 204 can allow system 102 to interact with a consumer directly or through user devices 104. In an embodiment, such interaction with consumers can be facilitated by at least one of a native application and web application. Further, I/O interface 204 can enable system 102 to communicate with other computing devices, such as web servers and external data servers (not shown). I/O interface 204 can facilitate multiple communications within a wide variety of networks and protocol types, including wired networks, for example, LAN, cable, etc., and wireless networks, such as WLAN, cellular, or satellite. I/O interface 204 can include one or more ports for connecting a number of devices to one another or to another server.

Memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Memory 206 may include modules 208 and system data 230.

Modules 208 can include routines, programs, objects, components, data structures, etc., which perform particular tasks or implement particular abstract data types to supplement applications and functions of system 102.

System data 230, amongst other things, can serve as a repository for storing data processed, received, and generated by one or more of modules 208. System data 230 may also include system database 232 and other data 234. Other data 234 may include data generated as a result of the execution of one or more modules 208.

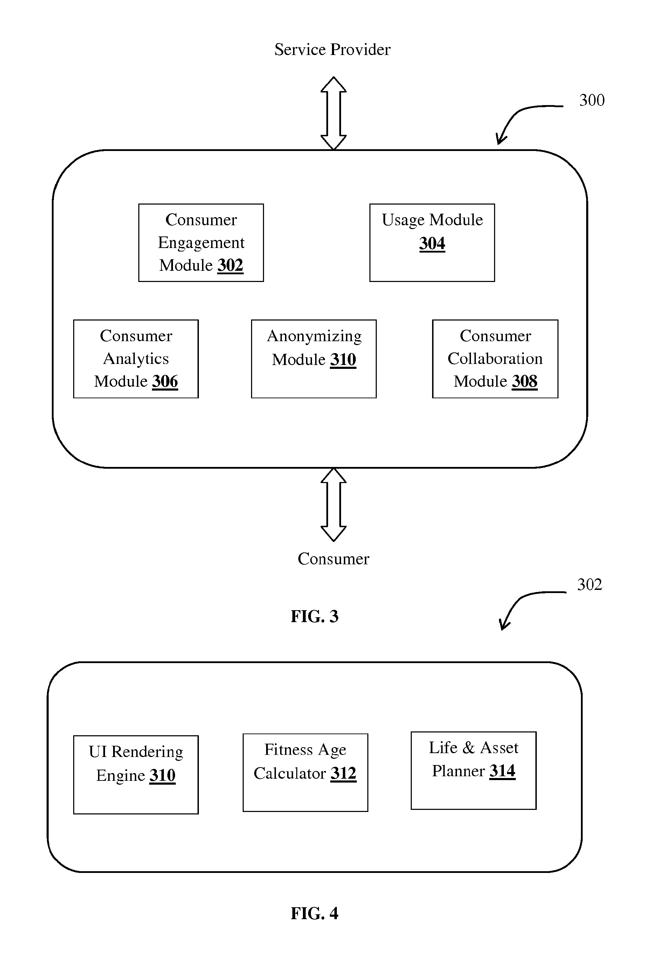

Referring to Figure 3, an exemplary block diagram of a system 300 for facilitating consumer engagement is illustrated. In an embodiment, system 300 can include consumer engagement module 302, usage module 304, consumer analytics module 306 and consumer collaboration module 308. In an embodiment, system 300 can further include anonymizing module 310.

In an embodiment, consumer engagement module 302 can be configured to provide an engagement platform for consumers to interact with each other and system 300. With technological advancements and multiple channels available at consumers' disposal, dissemination of information in a structured manner such that it educates consumers and provides solutions to their concerns and queries at a one stop shop is imperative for consumer stickiness. Consumer engagement module 302 leverages voluminous data that can be received from consumers via prevalent digital channels including but not limited to smartphones, tablets, desktop, wearable devices, augmented reality rendering devices, hand-held and portable devices for receiving consumer requirements and enabling interaction between peers, experts and system data 230 (Figure 2). The consumer engagement module 302 also engages prospective customers at a very early stage in their journey to seek risk protection for their life and assets.

In accordance with an embodiment, as illustrated in Figure 4, consumer engagement module 302 can include a user interface (UI) rendering engine 310 for consumers to interact with at least one of peers, experts and system data 230 via at least one digital channel. Consumer engagement module 302 can further comprise at least one gamification module (not numbered) that can be configured to utilize captured data from the digital channel and enhance consumer engagement by providing a personalized experience to each of the consumers in an informal manner via the rendered UI.

In an embodiment, usage module 304 can be configured to aggregate the captured data associated with each of the consumers throughout each consumer's engagement lifecycle. For instance, a consumer may be interested in retirement options and wants to plan his/her future. The consumer may also have liabilities and may need to consider his/her liabilities when planning the retirement options. Again some of the consumer's resources may be required to be set aside for education of kids or marriage or any other planned activities. Traditionally, consumers would have to approach different service providers for addressing their different needs. In the present day scenario, consumers may share their concerns and queries on social networking sites with friends or sometimes in desperation even with strangers. System of the present disclosure provide a unified platform wherein consumers can share their queries and concerns and they will be addressed at a single point either by the system itself or at least by facilitating interaction with peers or experts. Usage module 304 can aggregate all such data received by consumer engagement module 302 for performing analytics by consumer analytics module 306.

In an embodiment, consumer analytics module 306 can be configured to analyze usage patterns associated with each of the consumers based on data aggregated by usage module 304. Consumer analytics module 306 can co-relate data to decipher the needs of the consumers to enable consumer collaboration module 308 to effectively address the needs.

In an embodiment, consumer collaboration module 308 can be configured to perform one or more combinations of identifying like-minded consumers and facilitating interaction between the identified consumers, facilitating interaction between at least one consumer and at least one expert and identifying and recommending at least one solution to at least one consumer corresponding to the analyzed usage patterns to increase consumer touch points and enhance consumer stickiness. Today's consumer is socially active and networking sites and such other means of communication play an important role in consumer education and also decision making. Consumer collaboration module 308 ensures that consumers with similar needs, identified by consumer analytics module 306, are connected together. Alternatively, in an embodiment, experts who can address the needs can be connected with the consumers by consumer collaboration module 308. In yet another embodiment, system data 230 (Figure 2) can serve as a repository of learned data and can provide solutions that can address the needs of the consumers.

In an embodiment, anonymizing module 310 can be configured to selectively anonymize the captured data associated with at least one of the consumers. The nature of most service industries necessitates at least a portion of data received to be of sensitive nature. Alternatively, consumers may want at least a portion of data shared by them to be confidential. Anonymizing module 310 can be further configured to disseminate selective data to consumer collaboration module 308 for peer or expert interaction based on the consumers' requirements retrieved by consumer engagement module 302.

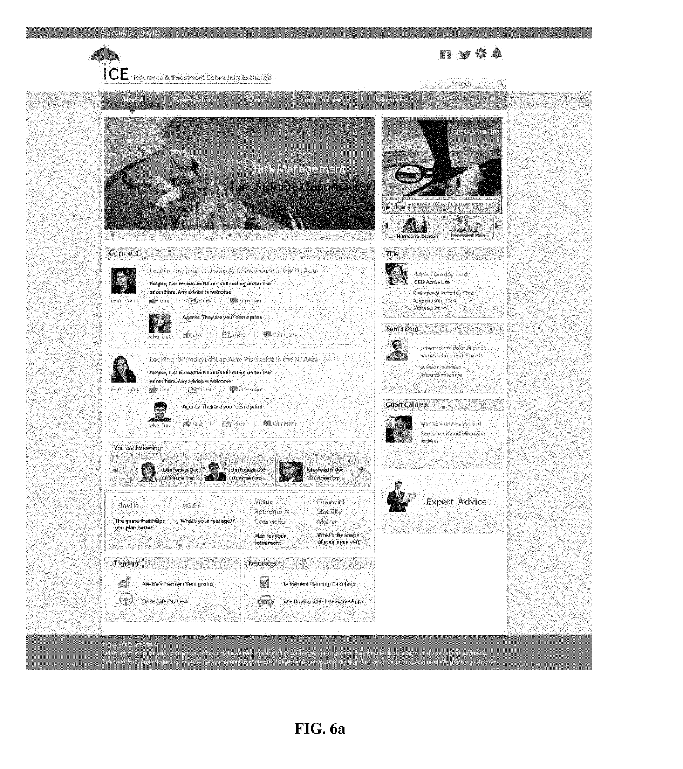

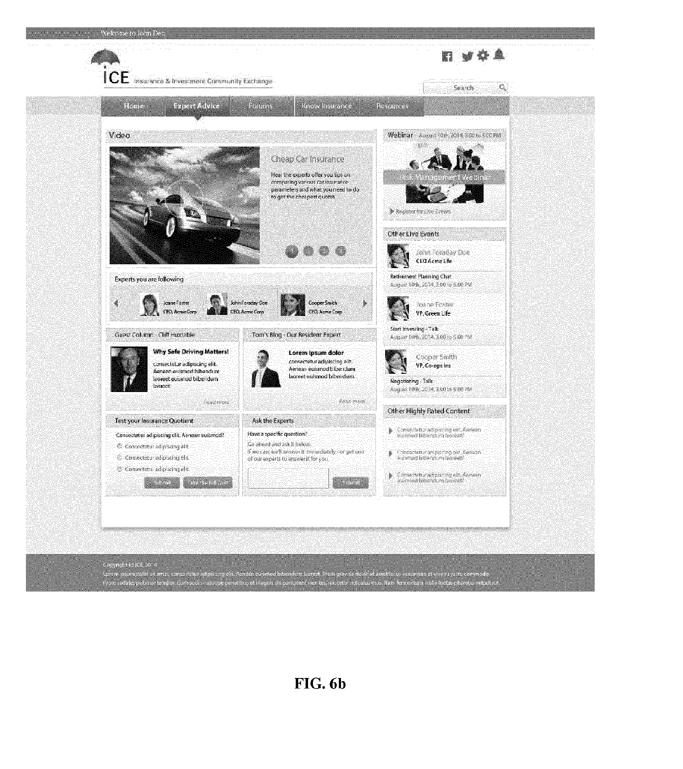

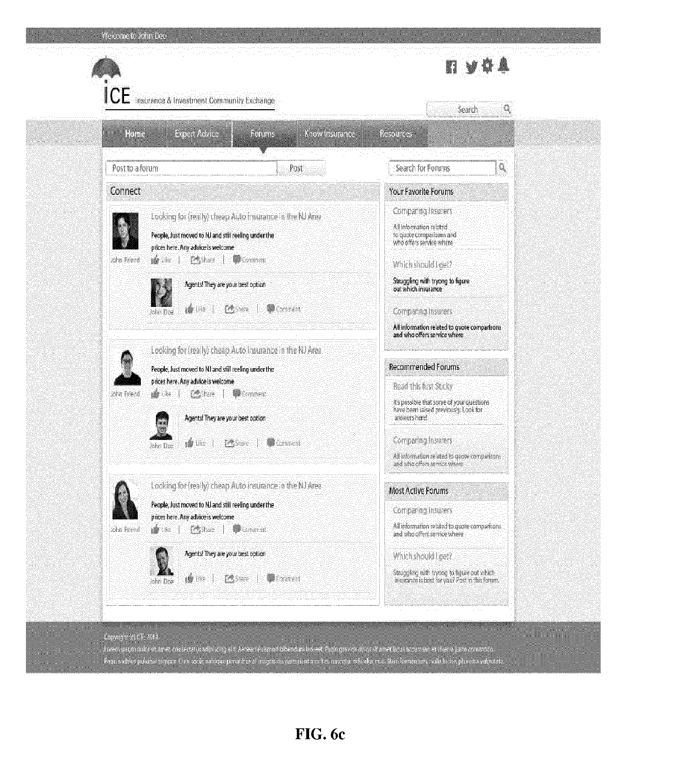

In an embodiment, User interface (UI) rendering engine 310 enables an Insurance and Investment Community Exchange (ICE) portal as illustrated in Figures 6a-6c. In an embodiment, the ICE is a portal that allows consumers to connect with peers and experts to exchange ideas and seek advice on financial planning and insurance/risk protection. The ICE portal can also enable aggregation of relevant information and content across the web and provide a personalized view of the connected consumer. The ICE portal aggregates various pieces of functionality that individually and collectively drives customer engagement through three important mechanisms. Firstly, the ICE portal enables identifying like-minded consumers to connect the insurer with consumers. In this case the target consumers are those consumers who are looking for information about insurance. Secondly, the ICE portal enables identifying consumer-oriented knowledge about insurance that seeks to educate consumers and increase their awareness through dissemination of digital information. Thirdly, the ICE portal also enables a community of experts to connect with the consumers and disseminate information about insurance and respond to queries. The ICE portal is aimed at potential prospects and existing customers of insurers who may be looking for information about insurance. Some of the needs of these consumers that the ICE portal can address include information about various insurance products and services that address their current needs such as questions about complex life insurance concepts, conventional retirement planning methods, children education funding and other annuity programs, Further, the information can also include, help information for consumers to better understand their statements of living/death benefits, beneficiary responsibilities and claim filing process for different scenarios. The information can also educate consumers on the financial investment terms and definitions and their relevance in choosing their financial portfolio. Further, the ICE portal can also enable connecting with other consumers with similar needs and find out what they are doing, attend live online events like chats and Webinars conducted by experts, access a comprehensive database of insurance information and the like.

In one embodiment, in order to enable these needs, the ICE portal can contain functional components such as forums with activity stream, chat and webinar platform, insurance related videos, blogs by resident and guest experts, quizzes relating to insurance, launch-point for various games and apps related to insurance and financial services, ability to connect with and "follow" experts, and customer profile information. Figures 6a-6c illustrate exemplary GUI for the ICE portal implemented as an online portal.

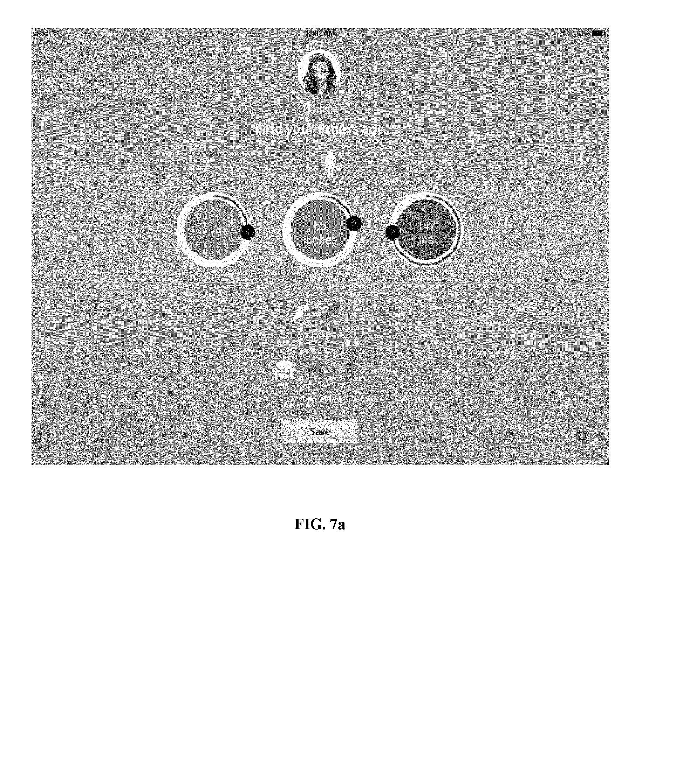

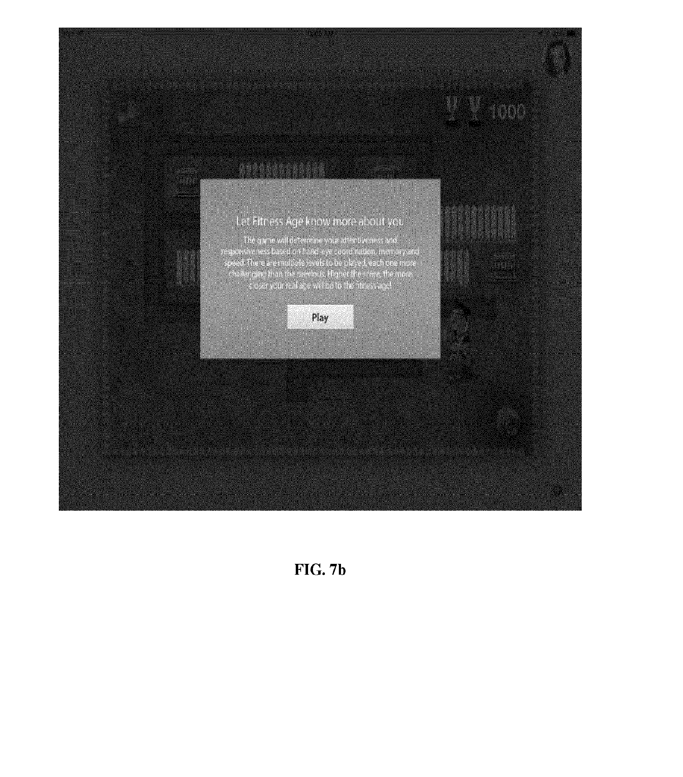

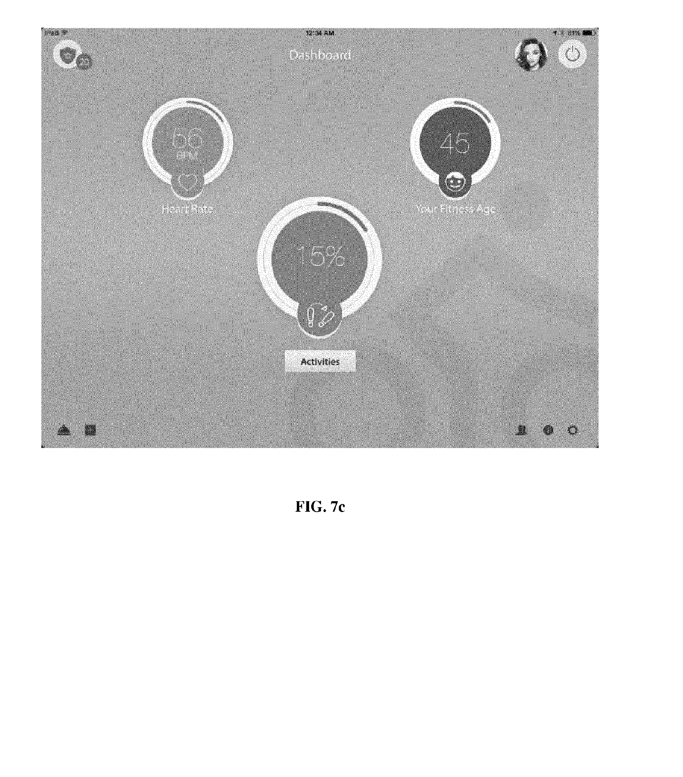

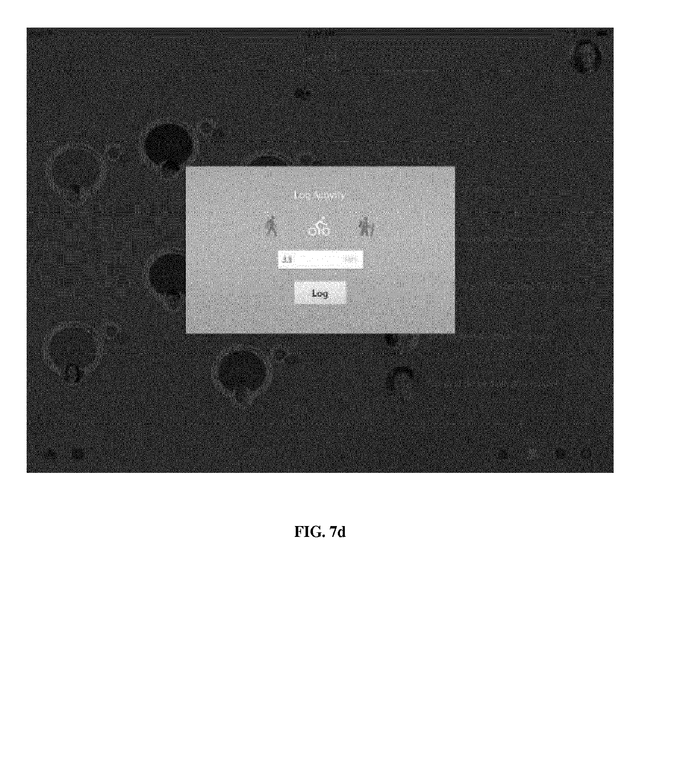

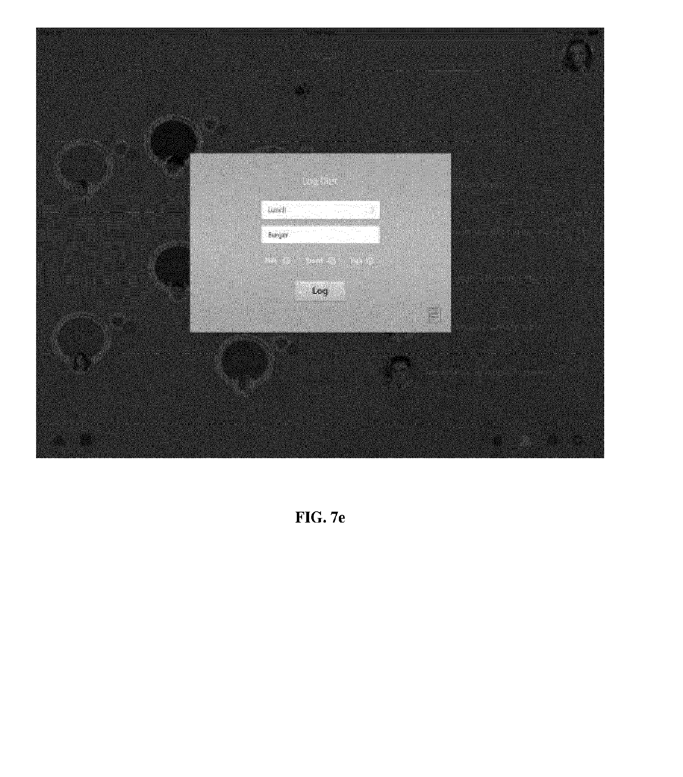

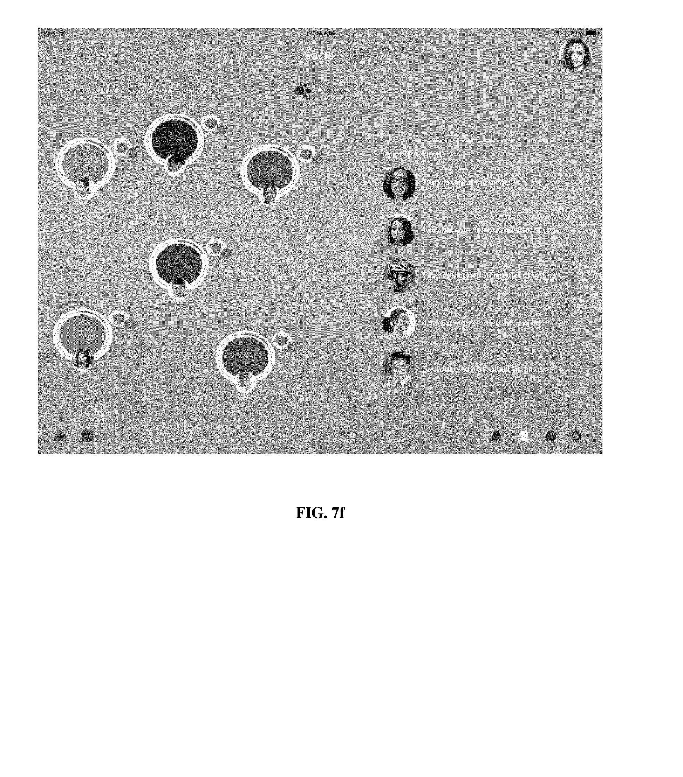

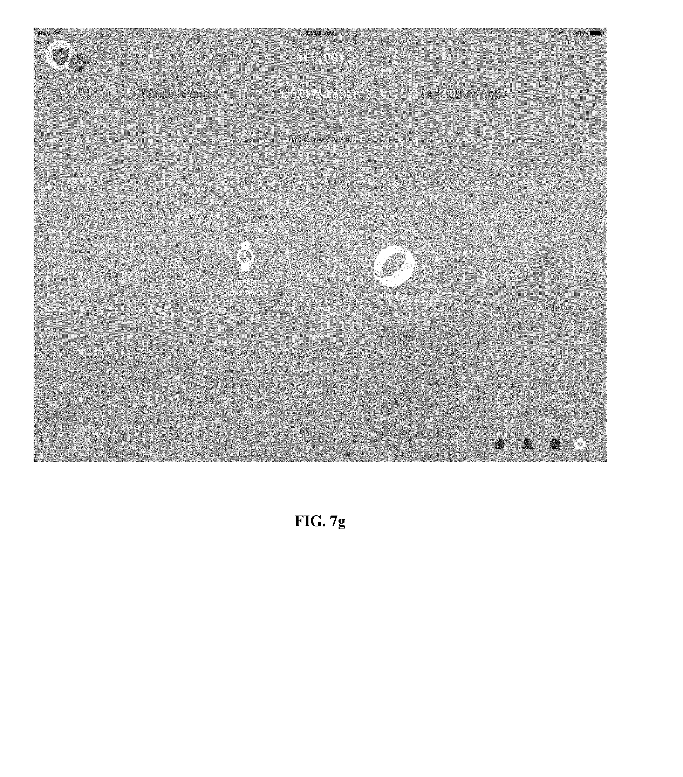

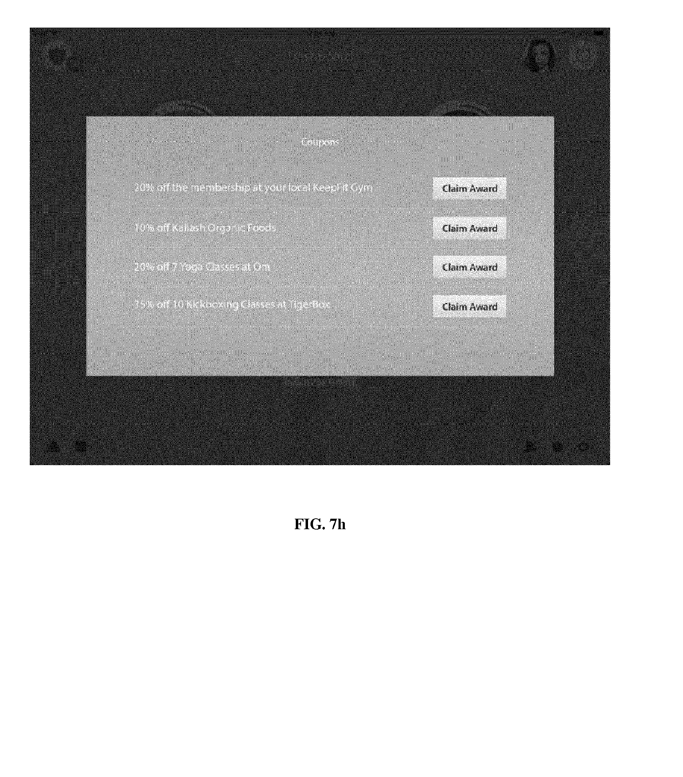

In accordance with an embodiment, as illustrated in Figure 4, exemplary gamification modules can include Fitness age calculator 312 and life and asset planner 314. In an embodiment, gamification module, Fitness age calculator 312 can be configured to ascertain the consumers' fitness age and compare it to their biological age. This module enables narrowing gaps, if any, between the fitness age and biological age of the consumer which will help consumers make an informed decision when making plans or considering financial options available. Fitness age calculator 312 can also better define risk taking ability for consumers. Figures 7a-7h illustrate exemplary screenshots of Fitness Age calculator 312 in accordance with an embodiment. The Fitness age calculator 312 can be configured to encourage an active lifestyle in consumers in a fun and interactive way. It provides a platform to input physical data characteristics for instance, age, height and weight, fitness activities, gaming responsiveness, calorie intake and uses an algorithm to compute the fitness age. A consumer's fitness age can then be shared with friends on a plurality of social platforms. The Fitness age calculator 312 can then display the calculated fitness age of friends, if they choose to share their fitness age to others. The active lifestyle is also encouraged, by promoting certain offers that may be of interest, on completing of physical activities like walking, running, etc. Further, the special offers can also be localized, based on geographical and individual preferences. The Fitness age calculator 312 can also be integrated with multiple commercial wearable devices that record user activity and can bring it for viewing on the dashboard screen which also makes possible to share activity data with friends, who may use different activity tracker wearables. Figure 7a represents a user interface for consumers to record their physical characteristics and setup their profile. Figure 7b represents a user interface for consumers to play an interactive game to calculate their Fitness age. Figure 7c represents a user interface for consumers to see the results on a fitness dashboard screen. Figures 7d and 7e represents a user interface for consumers to input activity and food consumed respectively to calculate fitness age. Figure 7f represents a user interface for consumers to share their fitness age with their friends/contacts on social media platforms. Figure 7g represents a user interface for consumers to setup integration with a variety of activity tracker wearable devices. Figure 7h represents a user interface to motivate consumers by presenting badges, awards and coupons from local vendors.

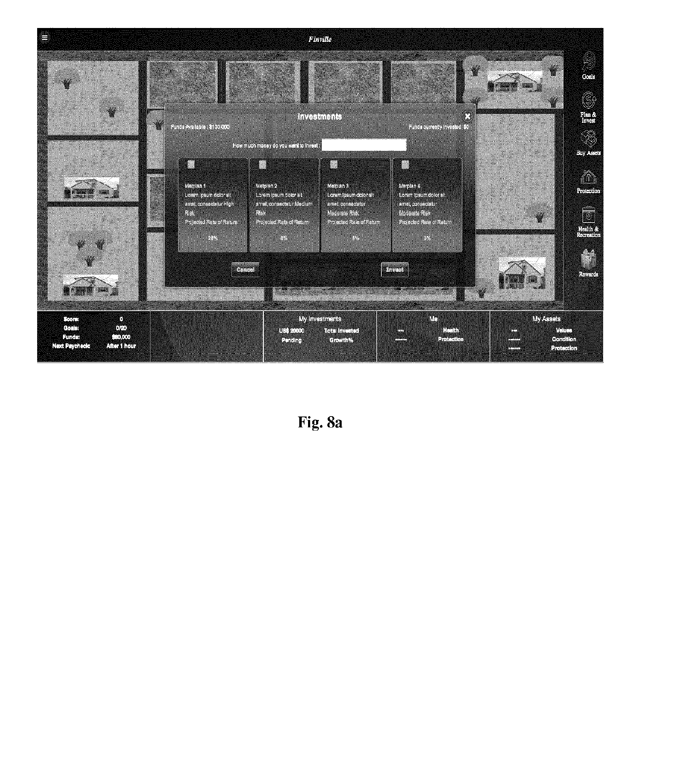

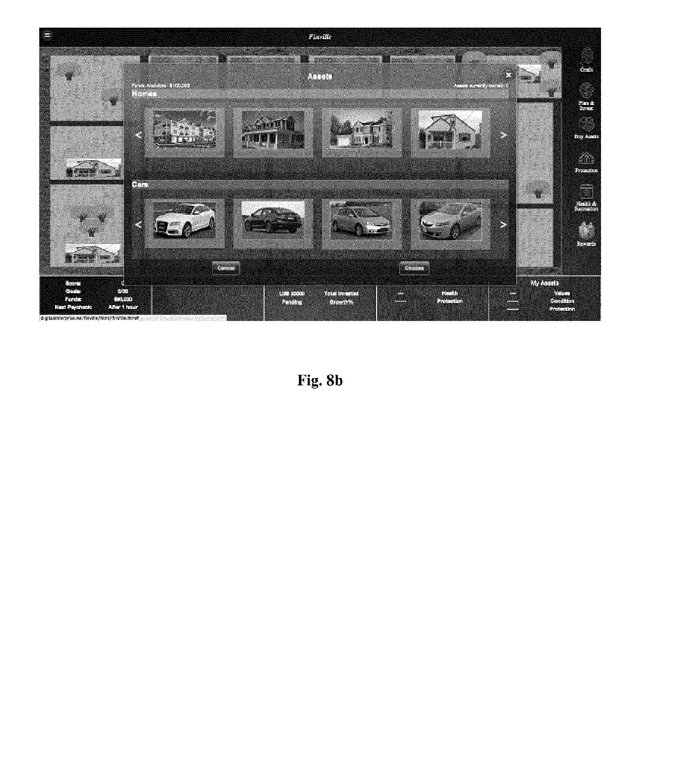

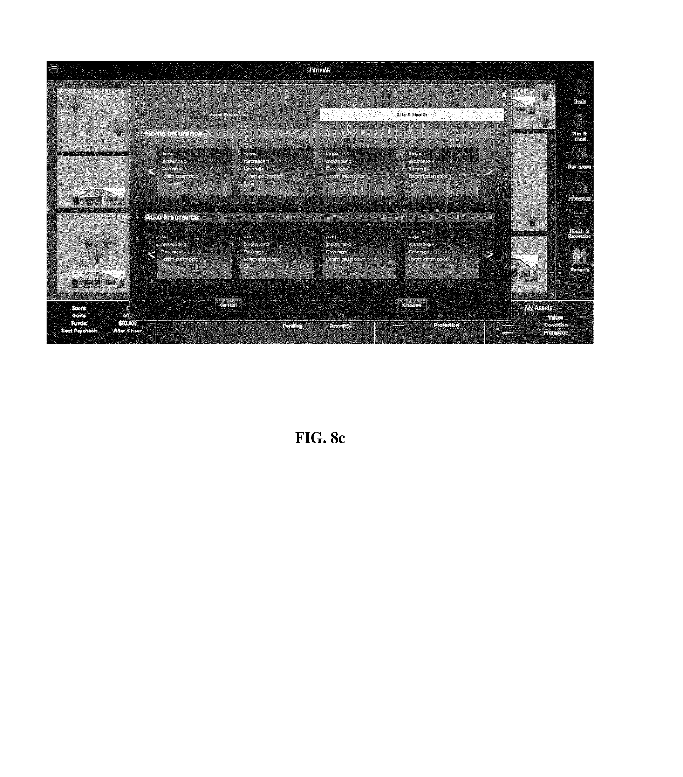

In an embodiment, gamification module, life and asset planner 314 can be configured to allow consumers to mimic real life goals related to financial planning, health, recreation, asset and life protection in a virtual environment and enable the consumers to explore solutions that can be applied to real life situations for enhanced living experiences. Figures 8a-8c illustrate exemplary screenshots of Life and Asset Planner in accordance with an embodiment. Life and asset planner 314 can educate the consumer on the importance of investments and risk protection by engaging consumers in a fun and goal-oriented manner. The service provider or the insurer can convey important underlying messages about financial and life planning and asset and life protection to consumers through life and asset planner 314 by creating a "virtual world" in which consumers pass through various levels in order to achieve a well-planned life. Each level has certain specific goals that the consumer has to achieve in order to "clear" the level and go to the next level. As the consumer seeks to achieve these goals, the consumer's virtual world is visited by potentially adverse events (much like in real life) which have an impact on the consumer's goals. This impact based on the actions and choices the consumer may have made previously could be positive or negative. The goals that comprise each level mimic real life goals related to financial planning, retirement planning, health and recreation and asset, health and life protection. Thus, as the consumer plays the game using life and asset planner 314, they are liable to notice a co-relation between their virtual world situations to various real-life situations. This may prompt them to engage the insurer in the real world for various products and services that correspond to the planning and protection actions they perform within the life and asset planner 314. While the fun aspects of the game along with goal-based challenges aim to keep the consumer engaged, the nature of the goals and the various levels mimic a consumer's life journey - thus opening up the consumer's mind to various current and future possibilities related to planning, asset building and asset protection. The fact that the virtual world, the consumer's goals and the potentially adverse events that consumers face within the game are analogous to real-world situations and thus potentially make the consumers more receptive to products and services. Life and asset planner 314 has an intrinsic design that allows the consumer to repeatedly relate their virtual world to the real world. This has two unique and powerful impacts, firstly the consumer's perspective changes. Life and asset planner 314 acts as an educational medium and widens their perspective. Secondly from the insurer's perspective life and asset planner 314 acts as a powerful tool to disseminate information about the various situations in a consumer's real life that are addressed by the products and services the insurer's offer. Additionally, life and asset planner 314 also has a more direct method of promoting the insurer's interests through a channel that allows the insurer to offer various promotional coupons and other rewards to the consumer. This is done through the mechanism offering the consumer real world awards on reaching game milestones. These awards could take the shape of coupons, discounts and other such promotions. In an exemplary embodiment, the consumer starts with a fixed sum of money. As the game starts, the consumer is informed of the various goals they need to achieve to clear a particular level. Based on the goals for that level, the consumer can take various actions. These actions involve the consumer exercising their best judgment given their finite resources and the fact that they need to use those resources in the most optimum manner that will allow them to achieve their goals. These actions may include buying an asset such as a house and / or a car available at various price points, buying protection for their assets available at varying coverages and price points, investing their money for various needs in the future. Investment options are available for various needs (like retirement planning), at various risk levels and various rates of returns, taking care of their health through buying life protection and various health and recreation options (like fitness trackers, gym memberships, taking a vacation) again available at various price points. Every purchase by the consumer decreases the net pool of funds available thus leaving less for other purchases and future needs. Figure 8a - 8c represent various asset and protection purchase scenarios in an exemplary embodiment

In an embodiment, Fitness age calculator 312 and life and asset planner 314 can provide input to consumer analytics module 306 for predictive or prescriptive analytics.

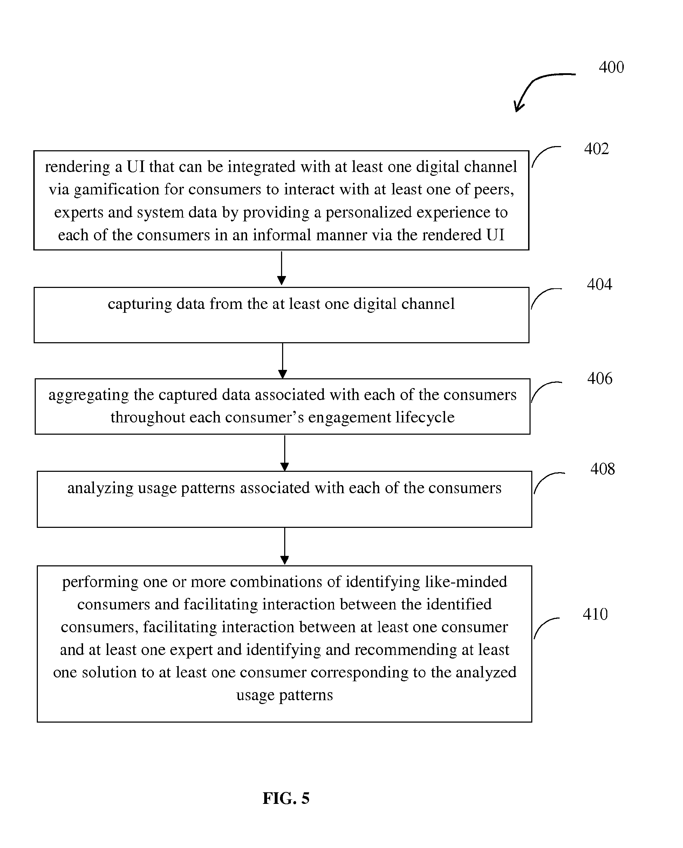

In an embodiment, system 300 of the present disclosure can be configured to perform steps as illustrated in an exemplary flow diagram 400 of Figure 5. At step 402, consumer engagement module 302 including a user interface (UI) rendering engine 310 can render a UI that can be integrated with at least one digital channel via gamification for consumers to interact with at least one of peers, experts and system data by providing a personalized experience to each of the consumers in an informal manner via the rendered UI. At step 404, data is captured from the digital channel by consumer engagement module 302. At step 406, usage module 304 aggregates the captured data associated with each of the consumers throughout each consumer's engagement lifecycle. At step 408, consumer analytics module 306 analyzes usage patterns associated with each of the consumers. At step 410, consumer collaboration module 308 performs one or more combinations of identifying like-minded consumers and facilitates interaction between the identified consumers, facilitating interaction between at least one consumer and at least one expert and identifying and recommending at least one solution to at least one consumer corresponding to the analyzed usage patterns.

System 300 thus aggregates the three diverse elements social networking, expert platform, and repository of insurance related information on life, retirement, pension, annuity, and the like. These features have a huge impact in educating prospects, existing customers and agents of the insurer and can create an audience receptive to products, services and messaging by insurers. Further, these three components together, allow customers to connect with the system of the present disclosure using prevalent user devices via either a native application or a response web application.

In an embodiment, the system of the present disclosure enables financial planning gamification techniques for creating awareness and understanding of insurance needs, products and services in consumers in a non-tedious and interesting manner by analysing voluminous data that can be retrieved from consumers through multi-channels available at the consumers' disposal today and get an insight into consumer behaviour to better serve and engage them. Accordingly, one or more wellness games enabled by the system can act as a platform to integrate data from different wearables and/or health apps that the consumers might be using. Further, a game's algorithm can be used to determine the fitness age of the consumer based on data entered by the consumer and data collected from the game. The system acts as an unbiased platform for consumers to ask questions and get responses on insurance needs from peers, friends and experts at the same time. Further, the system provides personalization on the content trend based on the consumer interests. The system also enables games as standalone / native apps or web apps that could be launched from a portal and further used to teach the consumers insurance schemas and other financial services and in general spread awareness. Furthermore, social analytics from the games and portal are leveraged to enhance the engagement model with consumers. Agile customer intelligence, tailor made quick responses and providing targeted solutions to the needs of the consumers at a one stop shop is a challenge addressed by the system of the present disclosure for improving consumer stickiness.

Although implementations of systems and methods for leveraging a multi-channel customer engagement framework has been explained in the context of promoting insurance schemas, it is to be understood that the appended claims are not necessarily limited to the specific features or methods described. Rather, the specific features and methods are disclosed as examples of implementations for displaying/presenting the data in multiple levels on the user interface.

The written description describes the subject matter herein to enable any person skilled in the art to make and use the embodiments of the invention. The scope of the subject matter embodiments defined here may include other modifications that occur to those skilled in the art. Such other modifications are intended to be within the scope if they have similar elements that do not differ from the literal language of the claims or if they include equivalent elements with insubstantial differences from the literal language.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the invention may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules comprising the system of the present disclosure and described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The various modules described herein may be implemented as either software and/or hardware modules and may be stored in any type of non-transitory computer readable medium or other storage device. Some non-limiting examples of non-transitory computer-readable media include CDs, DVDs, BLU-RAY, flash memory, and hard disk drives.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

## Claims

1. A system (300) for multi-channel data aggregation comprising:
one or more processors;
a communication interface device;
one or more internal data storage devices operatively coupled to the one or more processors for storing one or more modules,
the system **characterized in that** the one or more modules comprise:
a consumer engagement module (302) configured to provide an engagement platform comprising a user interface (UI) rendering engine (310) for consumers to interact with at least one of peers, experts and system data via at least one digital channel, the consumer engagement module further comprising at least one gamification module configured to utilize data captured from the at least one digital channel and enhance consumer engagement by providing a personalized experience to each of the consumers in an informal manner via the rendered UI;
a usage module (304) configured to aggregate the captured data associated with each of the consumers throughout each consumer's engagement lifecycle;
a consumer analytics module (306) configured to analyze usage patterns associated with each of the consumers; and
a consumer collaboration module (308) configured to perform one or more combinations of identifying like-minded consumers and facilitating interaction between the identified consumers, facilitating interaction between at least one consumer and at least one expert and identifying and recommending at least one solution to at least one consumer corresponding to the analyzed usage patterns to increase consumer touch points and enhance consumer stickiness.

2. A system according to claim 1, wherein the at least one gamification module comprises at least one of:
a fitness age calculator (312) configured to ascertain the consumers' fitness age and compare it to their biological age; and
a life and asset planner (314) configured to allow the consumers to mimic real life goals related to financial planning, health, recreation, asset and life protection in a virtual environment and enable the consumers to explore solutions that can be applied to real life situations for enhanced living experiences,
wherein the fitness age calculator and the life and asset planner provide an input for predictive or prescriptive analytics, by the consumer analytics module.

3. A system according to claim 1 further comprising an anonymizing module (310) configured to selectively anonymize the captured data associated with at least one of the consumers and further configured to disseminate selective data to the consumer collaboration module for peer or expert interaction based on the consumers' requirements retrieved by the consumer engagement module.

4. A system according to claim 1, wherein the at least one gamification module is implemented as at least one of a native application and web application.

5. A system according to claim 1, wherein the consumer engagement pertains to insurance and financial services.

6. A method (400) for multi-channel data aggregation in a system comprising one or more processors; a communication interface device; one or more internal data storage devices operatively coupled to the one or more processors for storing modules **characterized in that** the method is configured to perform:
rendering a UI that can be integrated with at least one digital channel via gamification, for consumers to interact with at least one of peers, experts and system data by providing a personalized experience to each of the consumers in an informal manner via the rendered UI (402);
capturing data from the at least one digital channel (404);
aggregating the captured data associated with each of the consumers throughout each consumer's engagement lifecycle (406);
analyzing usage patterns associated with each of the consumers (408); and
performing one or more combinations of identifying like-minded consumers and facilitating interaction between the identified consumers, facilitating interaction between at least one consumer and at least one expert and identifying and recommending at least one solution to at least one consumer corresponding to the analyzed usage patterns to increase consumer touch points and enhance consumer stickiness (410).

7. A method according to claim 6 further comprising the step of selectively anonymizing the captured data associated with at least one of the consumers and disseminating selective data to the consumer collaboration module for peer or expert interaction based on the consumers' requirements retrieved from the captured data.

8. A method according to claim 6, wherein the step of analyzing usage patterns further comprises predictive or prescriptive analytics by at least one of :
calculating the consumers' fitness age and comparing it to their biological age; and
simulating the consumer's real life goals related to financial planning, health, recreation, asset and life protection in a virtual environment for enabling the consumers to explore solutions that can be applied to real life situations for enhanced living experiences.
